# EUROPÄISCHE PATENTSCHRIFT

(11) **EP 1 657 975 B1**
(45) Veröffentlichungstag und Bekanntmachung des Hinweises auf die Patenterteilung: **21.03.2007**
(21) Anmeldenummer: 04762634.6
(22) Anmeldetag: 09.08.2004
(51) Int. Cl.: A01G 17/02, A01D 46/00

(54) **ENTLAUBUNGSVORRICHTUNG, INSBESONDERE FÜR WEINSTÖCKE**
LEAF-STRIPPING DEVICE, ESPECIALLY FOR VINES
DISPOSITIF D'EFFEUILLAGE, NOTAMMENT POUR LA VIGNE

(30) Priorität: 29.08.2003 DE 10340231
(43) Veröffentlichungstag der Anmeldung: 24.05.2006
(73) Patentinhaber: Binger Seilzug GmbH & Co KG, 55411 Bingen (DE)
(72) Erfinder: Pieroth, Armin, 55411 Bingen (DE); Pieroth, Udo, 55411 Bingen (DE)
(74) Vertreter: Becker, Bernd
(86) Internationale Anmeldenummer: PCT/DE2004/001789
(87) Internationale Veröffentlichungsnummer: WO 2005/022985

(56) Entgegenhaltungen:
- DE-U- 9 109 887
- FR-A- 2 417 932
- FR-A- 2 483 168
- FR-A- 2 816 802

## Beschreibung

Die Erfindung bezieht sich auf eine Entlaubungsvorrichtung, insbesondere für Weinstöcke, mit einem Sauggebläse und davor angeordneten Entlaubungswerkzeugen, die zwei parallel zueinander angeordnete drehbare Walzen umfassen, von denen mindestens eine angetrieben ist.

Eine solche Entlaubungsvorrichtung wird zum Entlauben von im Spalier wachsenden Kulturen, insbesondere von Weinstöcken oder Obstbäumen, verwendet. Die Weinreben der Weinstöcke werden beispielsweise in Höhe ihrer Traubenzone von einem Teil ihres Laubes befreit, wobei nicht zu viele Blätter entfernt werden sollen, um eine ausreichende Assimilationsfläche beizubehalten. Die Entlaubung wird zu einer besseren Belüftung der Traubenzone und zu einer höheren Sonneneinwirkung auf die Früchte durchgeführt, wodurch Krankheiten reduziert werden und die Früchte Pflanzenschutzmitteln direkt ausgesetzt sind. Diese Effekte führen zu relativ gesunden und reifen Trauben und damit letztendlich zu einem hochwertigen Wein.

Die FR-A-2 417 932 offenbart eine Entlaubungsvorrichtung, insbesondere für Weinstöcke, mit einem Sauggebläse und davor angeordneten Entlaubungswerkzeugen, die zwei parallel zueinander angeordnete drehbare Walzen umfassen, von denen mindestens eine angetrieben ist.

Aus der Praxis sind verschiedene Entlaubungsvorrichtungen bekannt, die in der Regel vor dem rechten oder linken Vorderrad eines Weinbergschleppers zu montieren sind.

Die FR 2 368 215 A und die DE 29 31 564 A1 offenbaren jeweils eine Entlaubungsvorrichtung, bei der vor einem Sauggebläse mehrere rotierende Messer als Entlaubungswerkzeuge angeordnet sind. Hierbei werden die abzutrennenden Blätter durch den von dem Sauggebläse erzeugten Luftstrom in eine Ebene der Schneidmesser gesaugt, die sie dann von den Pflanzen abtrennen. Bei diesen Entlaubungsvorrichtungen erweist es sich als problematisch, dass durch den Luftstrom auch relativ viele Früchte angesaugt werden, die durch die rotierenden Schneidmesser zerstört werden. Um dem entgegen zu wirken, ist es beispielsweise aus der FR 2 390 084 A, EP 0 278 607 A1 und DE 295 18 392 U1 bekannt, vor den als rotierenden Schneidmessern ausgebildeten Entlaubungswerkzeugen einen Gitterrost anzuordnen, der das Einsaugen der Früchte in den Bereich der Schneidmesser verhindert.

Darüber hinaus zeigt die WO 01/87047 eine aufwendig aufgebaute Entlaubungsvorrichtung mit einem Entlaubungskopf, der eine drehbare Walze und ein Sauggebläse zur Erzeugung eines die Walze umströmenden Luftstroms umfasst. Zum Entlauben von Weinreben ist der Walze ein Messerbalken zugeordnet, der einem gewissen Verschleiß unterliegt.

Des Weiteren ist aus der Praxis eine Entlaubungsvorrichtung bekannt, die eine vertikal ausgerichtete Gummirolle aufweist, um die Früchte ohne Beschädigung an die Entlaubungsvorrichtung anzulegen. Die Gummirolle verhindert gleichzeitig, dass Fremdkörper, wie z.B. Pfähle, in nachgeschaltete Messer gelangen, zwischen die ein Sauggebläse das Laub einsaugt. Diese Entlaubungsvorrichtung gilt als traubenschonend, ist aber relativ teuer und weist ein hohes Gewicht auf, weshalb sie nur an einem relativ schweren Traktor zu befestigen ist, der eine hohe Bodenverdichtung verursacht.

Der Erfindung liegt die Aufgabe zugrunde, eine Entlaubungsvorrichtung der eingangs genannten Art zu schaffen, die bei einem einfachen und kostengünstigen Aufbau eine früchteschonende zuverlässige Entlaubung sicherstellt.

Erfindungsgemäß wird die Aufgabe dadurch gelöst, dass mindestens eine Walze umfangsseitige Nuten aufweist.

Das von den Pflanzen abzutrennende Laub wird mittels des Sauggebläses zwischen die beiden Walzen gesaugt, die die Blätter zwischen sich einpressen und von den Pflanzen abreißen. Damit weist die Entlaubungsvorrichtung eine relativ einfache sowie leichte und kostengünstige Konstruktion auf. Aufgrund der umfangsseitige Nuten in mindestens einer der Walzen ist die Luftströmung des Sauggebläses zum Ansaugen des Laubes erhöht.

Nach einer vorteilhaften Weiterbildung der Erfindung sind die Walzen derart ausgebildet, dass Laub von der Pflanze abgetrennt wird und Früchte der Pflanze nicht beschädigt werden. Hierzu weisen beispielsweise die Oberflächen der Walzen eine relativ geringe Reibung auf, die im Zusammenhang mit einer natürlichen Wachsschicht auf der Oberfläche der Früchte ein Einziehen der Früchte zwischen die Walzen weitestgehend verhindert. Da das Laub gegenüber den Früchten eine verhältnismäßig große Reibung aufweist, wird es von den Walzen transportiert und von der Pflanze abgezupft.

Zweckmäßigerweise entspricht die Breite und Tiefe der Nut etwa der Größe der Frucht. Durch die Nuten ergibt sich ein zusätzlicher Sortiereffekt, da die Früchte nicht wie das Laub flach auf den Nuten aufliegen sondern diese relativ großflächig abdecken und insbesondere bei Trauben zwischen deren Beeren weitere Luftkanäle verbleiben, weshalb der Unterdruck zwischen den Früchten und der Walze vergleichsweise gering ist und die ohnehin durch den Luftstrom nur schwer zu bewegenden Früchte nicht zwischen die Walzen gelangen. Vorzugsweise sind die Nuten in die angetriebene Walze eingebracht.

Zur Vermeidung des Anhaftens des abgetrennten Laubes an einer der Walzen, ist zweckmäßigerweise die angetriebene Walze aus einem Kunststoff mit einer schwer benetzbaren Oberfläche gefertigt.

In Ausgestaltung der Erfindung liegt die nicht angetriebene Walze federbeaufschlagt an der angetriebenen Walze an. Hierbei ist zweckmäßigerweise die nicht angetriebene Walze jeweils stirnseitig in einem Hebelgestänge gelagert, an dem Anpressfedern für die Walze angreifen. Damit wird die nicht angetriebene Walze, also die nicht direkt angetriebene Walze, durch die motorisch angetriebene Walze in Rotation versetzt. Über das federbeaufschlagte Hebelgestänge ist zum einen ein Toleranzausgleich und zum anderen ein erforderlicher Anpressdruck an der gegenüberliegenden Walze zum Abzupfen des Laubes von der Pflanze sichergestellt.

Um die Blätter sicher durch die beiden Walzen zu führen und dabei von der Pflanze zu entfernen, weist bevorzugt die nicht angetriebene Walze eine elastische Umfangsfläche auf. Zweckmäßigerweise ist die Umfangsfläche der nicht angetriebenen Walze aus einem Elastomer gefertigt. Das Elastomer kann beispielsweise in Form eines Schlauches auf die Umfangsfläche der Walze aufgebracht werden. Durch die Auswahl der Werkstoffe der beiden Walzen, nämlich zum einen beispielsweise ein Polyäthylen und zum anderen eine elastomere Oberfläche, ist ein Zerreißen der Blätter und ein Auspressen von Pflanzensäften weitestgehend reduziert, weshalb relativ wenig Blätter bzw. Blattteile das Sauggebläse verschmutzen. Zur Entfernung von gegebenenfalls an den Walzen anhaftenden Laubes ist vorzugsweise zumindest einer der Walzen ein sich über deren Länge erstreckender Abstreifer für das Laub zugeordnet. Falls beispielsweise die eine Walze eine elastomere Umfangsfläche aufweist, an der Laub anhaften kann, wird der Abstreifer dicht über der Umfangsfläche der Walze positioniert.

Um bei einer Spalieranlage eine vergleichsweise hohe Entlaubungshöhe bereitzustellen, sind die beiden Walzen vertikal ausgerichtet und in einem gemeinsamen Strömungskanal mit dem Sauggebläse angeordnet. Somit transportiert der Luftstrom des Sauggebläses die Blätter in den Bereich zwischen die beiden Walzen, die die Blätter erfassen und von der Pflanze entfernen.

Zur Erzielung eines die Blätter erfassenden Einzugsbereiches zwischen den Walzen, der eine Beschädigung der Früchte ausschließt, ist zweckmäßigerweise der Durchmesser der nicht angetriebenen Walze kleiner bemessen als der Durchmesser der angetriebenen Walze.

Damit ein definierter Entlaubungsbereich erzielt wird, sind bevorzugt die beiden Walzen auf der dem Laub zugewandten Seite teilweise von einer Abdeckplatte überspannt, die einen Ausschnitt mit einer Einlaufschräge für das Laub aufweist. Selbstverständlich kann dem Ausschnitt eine vertikal verschiebbare Blende zur Veränderung des Entlaubungsbereiches zugeordnet werden. Zweckmäßigerweise ist die Abdeckplatte an der laubseitigen Stirnseite des Strömungskanals befestigt.

Für eine besonders starke Entlaubung bis hin zu einer nahezu vollständigen Entlaubung ist es möglich, mehrere Paare von Walzen hintereinander anzuordnen. Darüber hinaus ist es denkbar, dass die Walzenpaare versetzt zur Laubwand ausgerichtet sind.

Nach einer vorteilhaften Weiterbildung des Erfindungsgedankens umfasst die Entlaubungseinrichtung Mittel zum frontseitigen Anbau an ein Fahrzeug, insbesondere einen Traktor. Wenn die Entlaubungsvorrichtung an einem Traktor benutzt wird, kann beispielsweise dessen Hydraulikaggregat zum Antrieb der angetriebenen Walze verwendet werden.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der vorliegenden Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

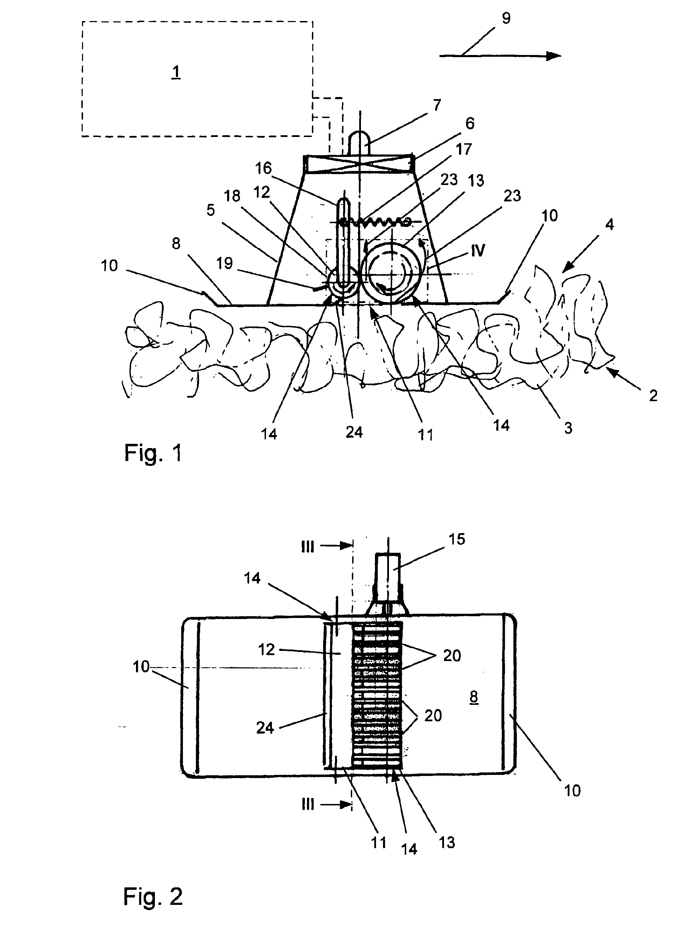

- Fig. 1: einen Teilschnitt einer Draufsicht auf die erfindungsgemäße Entlaubungsvorrichtung,
- Fig. 2: eine Vorderansicht der Entlaubungsvorrichtung nach Fig. 1,

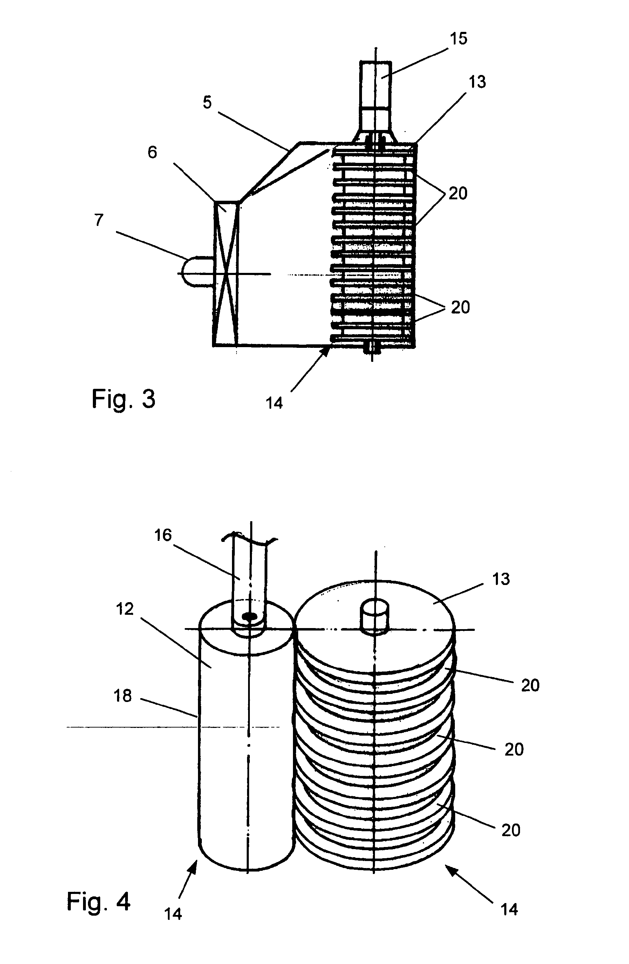

- Fig. 3: eine Darstellung eines Teilschnittes entlang der Linie III-III nach Fig. 2,
- Fig. 4: eine perspektivische Darstellung einer Einzelheit IV nach Fig. 1 und

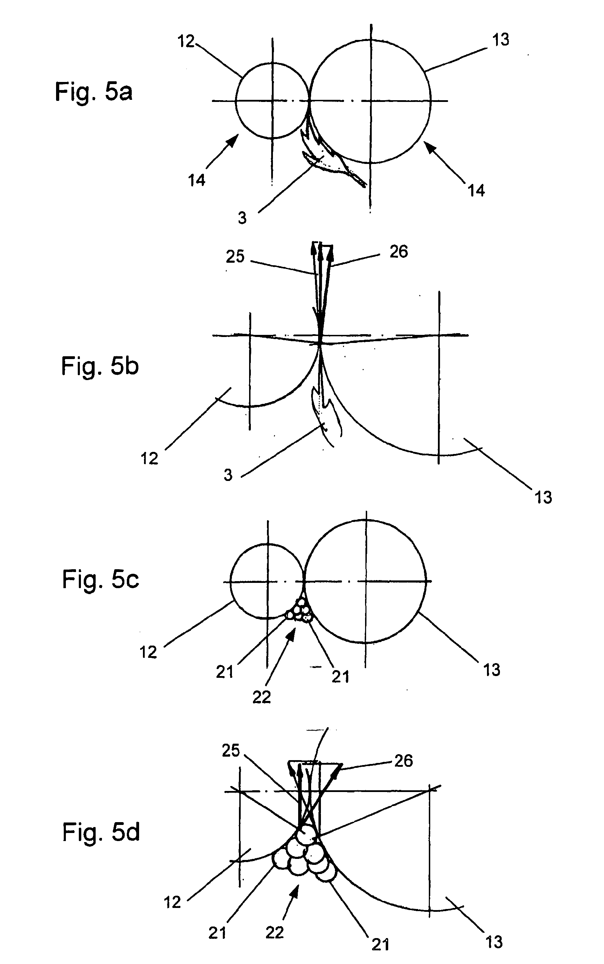

- Fig. 5a bis Fig. 5d: schematische Darstellungen der Funktionsweise der Entlaubungsvorrichtung.

Die Entlaubungsvorrichtung ist an der Front eines schematisch dargestellten Traktors 1 angebaut und wird durch diesen entlang im Spalier wachsender Weinstöcke 2 transportiert, um deren Blätter 3 zumindest teilweise zu entfernen. Zum Ansaugen der Blätter 3 aus einer durch die Weinstöcke 2 gebildeten Laubwand 4 umfasst die Entlaubungseinrichtung ein in einem trichter- oder zylinderförmigen Gehäuse 5 angeordnetes Sauggebläse 6, das von einem Motor 7 angetrieben ist. Auf der der Laubwand 4 zugewandten Seite der Entlaubungsvorrichtung ist eine Abdeckplatte 8 vorgesehen, die sowohl in der durch einen Pfeil 9 dargestellten Arbeitsrichtung als auch dazu entgegengesetzt endseitige von der Laubwand 4 wegweisende Abwinklungen 10 aufweist. In der Abdeckplatte 8 befindet sich ein Ausschnitt 11, durch den die abzutrennenden Blätter 3 in den Wirkbereich von als Walzen 12, 13 ausgebildeten Entlaubungswerkzeugen 14 gelangen.

Die beiden Walzen 12, 13, von denen eine mit einem Antriebsmotor 15 gekoppelt ist, sind mit ihren Drehachsen in vertikaler Richtung und parallel zueinander innerhalb des Gehäuses 5 drehbar gelagert. Die nicht angetriebene Walze 12 ist mit ihren Stirnseiten in einem Hebelgestänge 16 aufgenommen, an dem Anpressfedern 17 angreifen, um die nicht angetriebene Walze 12 gegen die angetriebene Walze 13 zu drücken. Damit eine Mitnahme der Blätter 3 in den Einzugsbereich zwischen den beiden Walzen 12, 13 gewährleistet ist, weist die nicht angetriebene Walze 12 eine aus einem Elastomer gefertigte und damit elastische Umfangsfläche 18 auf. Zum Entfernen von ggfls. nach der Entlaubung an der elastischen Umfangsfläche 18 der nicht angetriebenen Walze 12 eventuell noch anhaftender Blätter 3 ist innerhalb des Gehäuses 5 ein Abstreifer 19 vorgesehen, der sich über die gesamte Länge der zugeordneten Walze 12 erstreckt. Die angetriebene Walze 13 ist aus einem schwer benetzbaren Kunststoff, beispielsweise einem Polyäthylen, gefertigt und weist umfangsseitig Nuten 20 auf, deren Breite und Tiefe in etwa der Größe einer Beere 21 einer Weintraube 22 entspricht.

Im Betrieb der Entlaubungsvorrichtung wird dieselbe mittels des Traktors 1 derart an den zu entlaubenden Weinstöcken 2 entlang verfahren, dass die Abdeckplatte 8 leicht an die Laubwand 4 angepresst ist. Durch das eingeschaltete Sauggebläse 6 entsteht eine Luftströmung gemäß den Pfeilen 23 um die angetriebene Walze 13, die durch deren umfangsseitige Nuten 20 begünstigt wird, wobei im Bereich der nicht angetriebenen Walze 12 innerhalb des Ausschnittes 11 der Abdeckplatte 8 ein sich in Richtung dieser Walze 12 erstreckende Abkantung 24 vorgesehen ist, die zum einen die hier herrschende Luftströmung minimiert und zum anderen die abzutrennenden Blätter 3 an diese Walze 12 anlegt. Durch die Luftströmung werden die relativ leicht beweglichen Blätter 3 in den Bereich zwischen den beiden Walzen 12, 13 gesaugt, wo sie aufgrund der Drehbewegung und der herrschenden Reibung eingeklemmt und von den Weinstöcken 2 abgezupft werden. Die derart entfernten Blätter werden durch den Luftstrom des Sauggebläses 6 aus dem Bereich der beiden Walzen 12, 13 entfernt. Da die Blätter 3 nahezu vollständig erhalten bleiben, ist der Austritt von Pflanzensäften minimiert, weshalb nahezu keine Blätter 3 an dem Sauggebläse 6 anhaften.

Die bei dem Entlaubungsvorgang auf die Blätter 3 und die Beeren 21 der Weintrauben 22 einwirkenden Einzugskräfte und Reibkräfte, die durch die Pfeile 25 und 26 dargestellt sind, sind im Wesentlichen durch die Dimensionen, also die Dicke bzw. den Durchmesser, des Blattes 3 bzw. der Beere 21 bestimmt. Beim Einzug eines relativ dünnen Blattes 3 sind die herrschenden Einzugskräfte annähernd gleich groß wie die vorhandenen Reibkräfte, weshalb gegenüber der wesentlich dickeren Beere 21, auf die wesentlich geringere Einzugskräfte und Reibkräfte einwirken, eine erhöhte Abreißkraft herrscht. Aufgrund der die Einzugskräfte und Reibkräfte mitbestimmenden Geometrie der Walzen 12, 13 ist eine Beschädigung der Weintrauben 22 beim Entlauben nahezu ausgeschlossen, da die Geometrie einen gewissen Sortiereffekt bewirkt. Dieser Sortiereffekt wird dadurch begünstigt, dass die relativ schwer durch den Luftstrom des Sauggebläses 6 zu bewegenden Weintrauben 22 nicht fest an die Walzen 12, 13 angepresst werden. Darüber hinaus weisen die Häute der Beeren 21, wie andere Obstsorten auch, eine natürlich Wachsschicht mit einem relativ niedrigen Reibungskoeffizienten auf, die die zwischen den Beeren 21 und den Walzen 12, 13 herrschenden Reibkräfte weitergehend reduziert. Des Weiteren werden die Einzugskräfte durch die Nuten 20 in der Umfangsfläche der angetriebenen Walze 13 bestimmt, da die Blätter 3 die Nuten 20 relativ großflächig abdecken, während zwischen den Beeren 21 der Weintraube 22 und den Nuten 20 durch eine Punktauflage Luftkanäle verbleiben, weshalb die Ansaugung der Weintrauben 22 an die Walzen 12, 13 relativ gering ist.

## Patentansprüche

1. Entlaubungsvorrichtung, insbesondere für Weinstöcke (2), mit einem Sauggebläse (6) und davor angeordneten Entlaubungswerkzeugen (14), die zwei parallel zueinander angeordnete drehbare Walzen (12, 13) umfassen, von denen mindestens eine angetrieben ist, **dadurch gekennzeichnet, dass** mindestens eine Walze (13) umfangsseitige Nuten (20) aufweist.

2. Entlaubungsvorrichtung nach Anspruch 1, **dadurch gekennzeichnet, dass** die Walzen (12, 13) derart ausgebildet sind, dass Laub von der Pflanze abgetrennt wird und Früchte der Pflanze nicht beschädigt werden.

3. Entlaubungsvorrichtung nach Anspruch 1, **dadurch gekennzeichnet, dass** die Breite und Tiefe jeder Nut (20) etwa der Größe der Frucht entspricht.

4. Entlaubungsvorrichtung nach Anspruch 1 oder 3, **dadurch gekennzeichnet, dass** die Nuten (20) in der angetriebene Walze (13) eingebracht sind.

5. Entlaubungsvorrichtung nach einem der Ansprüche 1 bis 4, **dadurch gekennzeichnet, dass** die angetriebene Walze (13) aus einem Kunststoff mit einer schwer benetzbaren Oberfläche gefertigt ist.

6. Entlaubungsvorrichtung nach einem der Ansprüche 1 bis 5, **dadurch gekennzeichnet, dass** die nicht angetriebene Walze (12) federbeaufschlagt an der angetriebenen Walze (13) anliegt.

7. Entlaubungsvorrichtung nach Anspruch 6, **dadurch gekennzeichnet, dass** die nicht angetriebene Walze (12) jeweils stirnseitig in einem Hebelgestänge (16) gelagert ist, an dem Anpressfedern (17) für die Walze (12) angreifen.

8. Entlaubungsvorrichtung nach einem der Ansprüche 1 bis 7, **dadurch gekennzeichnet, dass** die nicht angetriebene Walze (12) ein elastische Umfangsfläche (18) aufweist.

9. Entlaubungsvorrichtung nach Anspruch 8, **dadurch gekennzeichnet, dass** die Umfangsfläche (18) der nicht angetriebenen Walze (12) aus einem Elastomer gefertigt ist.

10. Entlaubungsvorrichtung nach einem der Ansprüche 1 bis 9, **dadurch gekennzeichnet, dass** zumindest einer der Walzen (12, 13) ein sich über deren Länge erstreckender Abstreifer (19) für das Laub zugeordnet ist.

11. Entlaubungsvorrichtung nach einem der Ansprüche 1 bis 10, **dadurch gekennzeichnet, dass** die beiden Walzen (12, 13) vertikal ausgerichtet und in einem gemeinsamen Strömungskanal mit dem Sauggebläse (6) angeordnet sind.

12. Entlaubungsvorrichtung nach einem der Ansprüche 1 bis 11, **dadurch gekennzeichnet, dass** der Durchmesser der nicht angetriebenen Walze (12) kleiner bemessen ist als der Durchmesser der angetriebenen Walze (13).

13. Entlaubungsvorrichtung nach einem der Ansprüche 1 bis 12, **dadurch gekennzeichnet, dass** die beiden Walzen (12, 13) auf der dem Laub zugewandten Seite teilweise von einer Abdeckplatte (8) überspannt sind, die einen Ausschnitt (11) mit einer Einlaufschräge (24) für das Laub aufweist.

14. Entlaubungsvorrichtung nach Anspruch 13, **dadurch gekennzeichnet, dass** die Abdeckplatte (8) an der laubseitigen Stirnseite des Strömungskanals befestigt ist.

15. Entlaubungsvorrichtung nach einem der Ansprüche 1 bis 14, **gekennzeichnet durch** mehrere hintereinander angeordnete Paare von Walzen (12,13).

16. Entlaubungsvorrichtung nach einem der Ansprüche 1 bis 15, **gekennzeichnet durch** Mittel zum frontseitigen Anbau an einem Fahrzeug, insbesondere einem Traktor (1).

## Claims

1. Leaf-stripping device, more especially for vines (2), the said device having a suction fan (6) and leaf-stripping tools (14), which are disposed upstream of the said suction fan and comprise two rotatable rollers (12, 13) that are disposed parallel to each other, at least one of the said rollers being driven, **characterised in that** at least one roller (13) includes grooves (20) on the circumferential side.

2. Leaf-stripping device according to claim 1, **characterised in that** the rollers (12, 13) are configured in such a manner that foliage is separated away from the plant and the fruits of the plant are not damaged.

3. Leaf-stripping device according to claim 1, **characterised in that** the width and depth of each groove (20) corresponds approximately to the size of the fruit.

4. Leaf-stripping device according to claim 1 or 3, **characterised in that** the grooves (20) are admitted in the driven roller (13).

5. Leaf-stripping device according to one of claims 1 to 4, **characterised in that** the driven roller (13) is produced from a plastics material with a surface that is difficult to wet.

6. Leaf-stripping device according to one of claims 1 to 5, **characterised in that** the non driven roller (12) abuts against the driven roller (13) impinged upon by a spring.

7. Leaf-stripping device according to claim 6, **characterised in that** the non driven roller (12) is mounted in each case at its end face in a lever system (16), with which contact springs (17) for the roller (12) cooperate.

8. Leaf-stripping device according to one of claims 1 to 7, **characterised in that** the non driven roller (12) includes a resilient circumferential face (18).

9. Leaf-stripping device according to claim 8, **characterised in that** the circumferential face (18) of the non driven roller (12) is produced from an elastomer.

10. Leaf-stripping device according to one of claims 1 to 9, **characterised in that** at least one of the rollers (12, 13) has associated therewith a scraper (19) for the foliage, the said scraper extending over the length of the said roller.

11. Leaf-stripping device according to one of claims 1 to 10, **characterised in that** the two rollers (12, 13) are orientated in a vertical manner and are disposed in a common flow duct with the suction fan (6).

12. Leaf-stripping device according to one of claims 1 to 11, **characterised in that** the diameter of the non driven roller (12) is smaller than the diameter of the driven roller (13).

13. Leaf-stripping device according to one of claims 1 to 12, **characterised in that**, on the side facing the foliage, the two rollers (12, 13) are spanned partially by a cover plate (8), which includes a cut-out (11) with an inlet inclination (24) for the foliage.

14. Leaf-stripping device according to claim 13, **characterised in that** the cover plate (8) is secured to the end face of the flow duct on the foliage side.

15. Leaf-stripping device according to one of claims 1 to 14, **characterised by** a plurality of pairs of rollers (12, 13) that are disposed one behind the other.

16. Leaf-stripping device according to one of claims 1 to 15, **characterised by** means for the attachment to a vehicle at the front end, more especially to a tractor (1).

## Revendications

1. Dispositif d'effeuillage, en particulier pour des ceps de vigne (2), avec un ventilateur aspirant (6) et, disposés devant lui, des outils d'effeuillage (14) comprenant deux tambours rotatifs (12, 13) qui sont disposés parallèlement l'un à l'autre et dont au moins un est entraîné, **caractérisé en ce qu'**au moins un tambour (13) est pourvu de rainures périphériques (20).

2. Dispositif d'effeuillage selon la revendication 1, **caractérisé en ce que** les tambours (12, 13) sont conçus de façon que le feuillage de la plante soit détaché et que les fruits de la plante ne soient pas endommagés.

3. Dispositif d'effeuillage selon la revendication 1, **caractérisé en ce que** la largeur et la profondeur de chaque rainure (20) correspondent sensiblement à la taille du fruit.

4. Dispositif d'effeuillage selon la revendication 1 ou 3, **caractérisé en ce que** les rainures (20) sont ménagées dans le tambour entraîné (13).

5. Dispositif d'effeuillage selon une des revendications 1 à 4, **caractérisé en ce que** le tambour entraîné (13) est réalisé en une matière synthétique possédant une surface à faible mouillabilité.

6. Dispositif d'effeuillage selon une des revendications 1 à 5, **caractérisé en ce que** le tambour non entraîné (12) est appliqué contre le tambour entraîné (13) avec une sollicitation élastique.

7. Dispositif d'effeuillage selon la revendication 6, **caractérisé en ce que**, au niveau de chacune de ses faces frontales, le tambour non entraîné (12) est monté sur une tringlerie à levier (16) sur laquelle agissent des ressorts de pression (17) pour le tambour (12).

8. Dispositif d'effeuillage selon une des revendications 1 à 7, **caractérisé en ce que** le tambour non entraîné (12) possède une surface périphérique élastique (18).

9. Dispositif d'effeuillage selon la revendication 8, **caractérisé en ce que** la surface périphérique (18) du tambour non entraîné (12) est réalisée en élastomère.

10. Dispositif d'effeuillage selon une des revendications 1 à 9, **caractérisé en ce qu'**à au moins un des tambours (12, 13) est associée une racle (19) à feuillage qui s'étend sur toute sa longueur.

11. Dispositif d'effeuillage selon une des revendications 1 à 10, **caractérisé en ce que** les deux tambours (12, 13) sont orientés verticalement et disposés dans un canal d'écoulement commun avec le ventilateur aspirant (6).

12. Dispositif d'effeuillage selon une des revendications 1 à 11, **caractérisé en ce que** le diamètre du tambour non entraîné (12) est plus petit que le diamètre du tambour entraîné (13).

13. Dispositif d'effeuillage selon une des revendications 1 à 12, **caractérisé en ce que**, sur le côté tourné vers le feuillage, les deux tambours (12, 13) sont partiellement recouverts par une plaque de recouvrement (8) qui est pourvue d'une découpe (11) avec un biseau d'entrée (24).

14. Dispositif d'effeuillage selon la revendication 13, **caractérisé en ce que** la plaque de recouvrement (8) est fixée à la face frontale, côté feuillage, du canal d'écoulement.

15. Dispositif d'effeuillage selon une des revendications 1 à 14, **caractérisé par** plusieurs paires de tambours (12, 13) disposées les unes derrière les autres.

16. Dispositif d'effeuillage selon une des revendications 1 à 15, **caractérisé par** des moyens pour l'attelage frontal à un véhicule, en particulier à un tracteur (1).
